# EUROPEAN PATENT SPECIFICATION

(11) **EP 3 354 392 B1**
(45) Date of publication and mention of the grant of the patent: **04.09.2019**
(21) Application number: 18153476.9
(22) Date of filing: 25.01.2018
(51) Int. Cl.: B23K 9/10, H02J 7/02

(54) **BATTERY JUMP AND CHARGE SYSTEM AND METHOD FOR A WELDER**
BATTERIESTARTHILFE- UND -LADESYSTEM UND -VERFAHREN FÜR EIN SCHWEISSGERÄT
SYSTÈME ET PROCÉDÉ DE CHARGE ET DE RECHARGE DE BATTERIE POUR UNE MACHINE À SOUDER

(30) Priority: 25.01.2017 US 201715414727
(43) Date of publication of application: 01.08.2018
(73) Proprietor: Lincoln Global, Inc., Santa Fe Springs, CA 90670 (US)
(72) Inventor: Enyedy, Edward A., Eastlake, OH Ohio 44095 (US); Meckler, Andreu P., Mentor, OH Ohio 44060 (US); Hruska, Adam M., Chardon, OH Ohio 44024 (US)
(74) Representative: Grosse Schumacher Knauer von Hirschhausen

(56) References cited:
- US-A1- 2014 299 589
- US-B2- 8 969 762

## Description

### FIELD OF THE INVENTION

The invention is related to a welding power source according to claim 6 and to a method of determining an unsafe condition of a welding power source according to claim 1. Embodiments of the present invention relate to systems and methods related to welding, and more specifically to welding systems providing welding output power and battery jump and/or charging output power.

### TECHNICAL BACKGROUND

More functionality is being added to engine-driven welding machines. US2014/0299589 A1 discloses a known welding machine in which the selected mode (welding output or battery charging output) is determined and an error is detected within the selected welding or charging mode. In addition to producing power for welding, it is common to find machines that include an air compressor, a hydraulic pump, and machines that create a generator output that may be used to charge or jump batteries of cars and industrial equipment. To perform the battery charge/jump functions, one possibility is to connect the battery cables directly to the welding studs of the welding machine and have the weld controller regulate the battery jump and charge power. While being a simple system, such a system has drawbacks which include the possibility that the operator may apply welding power to the battery, causing damage to the battery and/or create some other hazard. Other machines use a separate and dedicated battery connector. To prevent weld power from going to the battery, a contactor breaks the connection to the welding studs. However, electromechanical contactors are known to be relatively expensive and have limited life, especially when used for switching high current.

### DESCRIPTION

In order to improve welding and/or to avoid damage to welding system components, especially to the battery, a method of determining an unsafe condition of a welding power source according to claim 1 and a welding power source according to claim 6 are described. Preferred embodiments of the invention are subject of the subclaims. Embodiments of the present invention include systems and methods related to welding, including welding in-the-field using an engine-driven welding machine. Exemplary embodiments are described herein which can be used for both welding and for jumping or charging a battery (e.g., the battery of a vehicle such as a car or a piece of industrial equipment). Power electronics are provided in a welding power source. The power electronics can provide welding power to a welding output connector of the welding power source and battery jump or battery charge power to a battery output connector of the welding power source.

To provide safe operation for an operator of the welding system, a controller having safety logic is provided within the welding power source. Also, current sensors are provided to sense unexpected electrical currents flowing through welding cables connected to the welding output connector of the welding power source and/or battery cables connected to the battery output connector of the welding power source. The safety logic in the controller is configured to interpret the sensed electrical currents and determine when an unsafe condition of the welding power source exists.

One embodiment includes a welding power source having a welding output connector and a battery output connector. In one embodiment, the welding power source is part of an engine-driven welding system. The welding power source also includes power electronics configured to provide welding power at the welding output connector and battery jump power or battery charge power at the battery output connector. A controller of the welding power source includes safety logic. The safety logic includes circuit hardware and/or computer-executable instructions stored in a memory and a processor for executing the computer-executable instructions. In some embodiments, the circuit hardware may include a digital signal processor, a combination of digital logic circuits, or analog electronic circuitry, for example. The welding power source also includes at least one current sensor. The current sensors are configured to sense when electric currents are flowing through cables connected to the welding output connector and/or the battery output connector. Each current sensor is also configured to provide a voltage, derived from the electric current as sensed, to the controller. The current sensor includes a precision resistor shunt, a hall-effect sensor, or a reed switch. The safety logic of the controller is configured to determine when an unsafe condition of the welding power source exists based on at least the voltage. In one embodiment, the power electronics is configured to apply a test voltage to the welding output connector and/or the battery output connector before a current sensor senses when an electric current is flowing through a cable connected to the welding output connector or the battery output connector, and before providing the voltage, derived from the electric current as sensed, to the controller. In one embodiment, the welding power source also includes a display screen configured to display a message provided by the controller indicating an unsafe condition. In one embodiment, the welding power source includes a user input configured to, when activated by a user, indicate to the controller that the user believes that the unsafe condition has been eliminated.

One embodiment includes a method of determining an unsafe condition of a welding power source. The method includes determining, via a controller of the welding power source, a selected mode within the welding power source as being a welding mode or a battery mode. In one embodiment, the battery mode is a battery jump mode or a battery charging mode. The method also includes, determining, via the controller of the welding power source, when at least one electric current is flowing through at least one cable connected to a a welding output connector or a battery output connector of the welding power source. The method includes detecting that the at least one electric current is flowing through at least one cable connected to the welding output connector or the battery output connector of the welding power source via a precision resistor shunt, a hall-effect sensor, or a reed switch. In one embodiment, the method includes communicating the detecting of the electric current to the controller of the welding power source as a voltage. The method further includes determining, via the controller of the welding power source, that a first unsafe condition of the welding power source exists when the selected mode is determined to be the welding mode and when the electric current is determined to be flowing through a cable connected to the battery output connector. The method also includes, shutting down, via the controller of the welding power source, power electronics of the welding power source in response to determining that the first unsafe condition of the welding power source exists. The power electronics is configured to provide welding power at the welding output connector during the welding mode. In one embodiment, the method further includes generating a message, via the controller of the welding power source, indicating the first unsafe condition and displaying the message, provided by the controller of the welding power source, on a display screen of the welding power source. In one embodiment, the method also includes indicating to the controller of the welding power source, via a user input, that the user believes that the unsafe condition has been eliminated. In one embodiment, the method includes determining, via the controller of the welding power source, that a second unsafe condition of the welding power source exists when the selected mode is determined to be the battery mode and when the electric current is determined to be flowing through at least one cable connected to the welding output connector. The method also includes shutting down, via the controller of the welding power source, the power electronics of the welding power source in response to determining that the second unsafe condition of the welding power source exists. In one embodiment, the power electronics is configured to provide battery jump power or battery charge power at the battery output connector during the battery mode. In one embodiment, the method includes generating a message, via the controller of the welding power source, indicating the second unsafe condition, and displaying the message, provided by the controller of the welding power source, on a display screen of the welding power source.

A non-claimed example includes a welding system having a power source. The power source includes a power output connector and a controller including a first communication circuit. The power source also includes power electronics configured to provide welding power at the power output connector during a welding mode and battery jump power or battery charge power at the power output connector during a battery mode. The welding system also includes welding cables configured to be connected to the power output connector to provide the welding power from the power output connector to a welding electrode and a workpiece during the welding mode to create an arc between the welding electrode and the workpiece. The welding system further includes a battery adapter having a battery input connector and a battery output connector. The battery adapter is configured to be connected to the power output connector via the battery input connector when the welding cables are not connected to the power output connector. The battery adapter includes a second communication circuit configured to communicate to the first communication circuit of the controller that the adapter is connected to the power output connector. In one embodiment, the battery adapter is configured to pass the battery jump power or the battery charge power from the battery input connector to the battery output connector when the battery input connector is connected to the power output connector during a battery mode of the welding system. In some embodiments, the first communication circuit and the second communication circuit communicate with each other via, for example, radio frequency identification (RFID) technology, Bluetooth® technology, or CrossLinc™ technology. In one embodiment, the welding system includes battery cables configured to be connected to the battery output connector of the battery adapter.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates an embodiment of a welding system configured as an engine-driven welding system;
FIG. 2 illustrates a first embodiment of a welding system configured to determine an unsafe condition of a welding power source of the welding system;
FIG. 3 illustrates a second embodiment of a welding system configured to determine an unsafe condition of a welding power source of the welding system;
FIG. 4 illustrates a third embodiment of a welding system configured to determine an unsafe condition of a welding power source of the welding system;
FIG. 5 illustrates a first embodiment of a controller of the welding system of FIG. 2 having a safety logic;
FIG. 6 illustrates a second embodiment of a controller of the welding system of FIG. 2 having a safety logic;
FIG. 7 illustrates a flow chart of a method which can be implemented, at least in part, in the welding systems of FIGS. 1-4 to determine an unsafe condition of a welding power source; and
FIG. 8 illustrates an alternative embodiment of a welding system configured to prevent an unsafe condition from occurring in a welding power source of the welding system.

### DETAILED DESCRIPTION

Embodiments of welding systems are disclosed. In one embodiment, a welding power source includes a welding output connector and a battery output connector. Power electronics of the welding power source provide welding power at the welding output connector and battery power at the battery output connector. A current sensor senses when an electric current is flowing through a cable connected to the welding output connector or the battery output connector and outputs a voltage to the controller of the welding power source that is indicative of the electric current as sensed. The controller of the welding power source includes safety logic that determines when an unsafe condition of the welding power source exists based on at least the voltage from the current sensor.

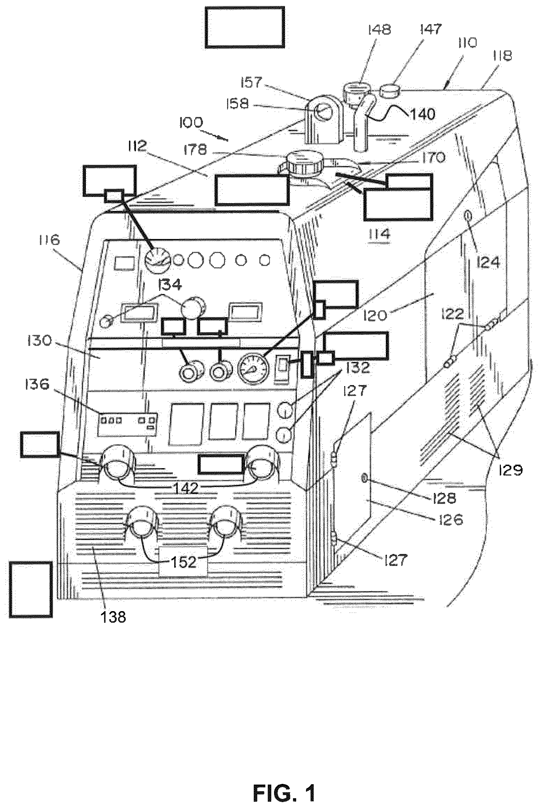

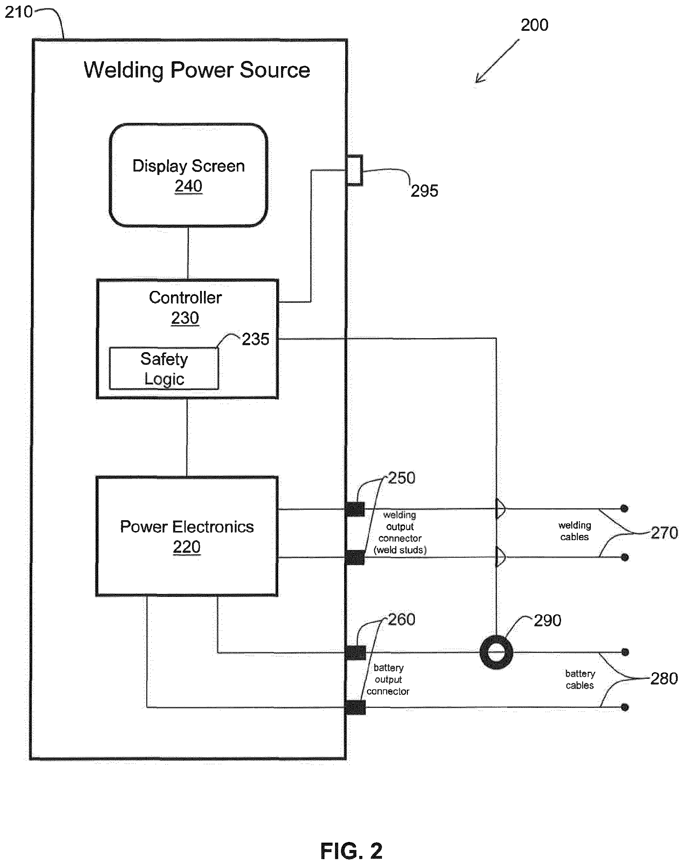

Referring now to the drawings, which are for the purpose of illustrating exemplary embodiments of the present invention only and not for the purpose of limiting same, FIG. 1 illustrates a self-contained, portable and fully-integrated welder/generator 100 (welding system) in accordance with an embodiment of the present invention. The welder/generator 100 is configured as an engine-driven welding system. The welder/generator 100 includes a housing 110 having a top portion 112, two side portions 114, 116, a back side 118 and a front panel 130. The welding housing is designed to encase at least a portion of the internal components of the welder/generator 100, including an embodiment of a welding power source described herein (e.g., see FIGS. 2-8) and an embodiment of an engine (not shown).

Positioned in the top portion 112 of the welding housing 110 is an exhaust pipe 140. The top of the housing typically includes one or more fluid accesses 147, 148 to add coolants, lubricants, etc. to the engine located within the housing. The top of the housing can include a lift device 157 having an opening 158. The lift device, when present, is used to lift and/or move the welder/engine 100 by use of a crane or similar apparatus. A grommet 170 is also located on the top portion of the housing. A fuel cap 178 is used to close the opening into the filler tube that is used to fill the fuel tank of the welder/engine 100. An engine access panel 120 is located on side 114 of the housing. The access panel allows a user access to the serviceable components of the engine. The access panel is connected to the hinges 122 to enable the panel to be opened. A latch or handle 124 is used to open and close the access panel. Another access opening 126 can be positioned on the side 114 closer to the front of the welder/engine 100 to allow access to components in the front portion of the housing. The access panel is also connected to the hinges 127 to enable the panel to be opened. A latch or handle 128 is used to open and close the access panel.

One or more sides of the housing include air vents 129 to allow air flow through the housing so as to facilitate cooling of the internal components of the housing. The housing 110 can include one or more compartments, not shown, that provide a storage area for welding tools, general maintenance tools (e.g., hammer, wrench, screwdriver, etc.), air-powered tools, hydraulic powered tools, electric powered tools, lights, etc. The front face or panel 130 of the housing 110 also includes a vent 138 that allows for air flow within the housing. The front panel also includes various switches, knobs, indicator lights and meters and gauges 132, 134, 136 to monitor and/or control the operation of the welder/generator 100 (e.g., to put the welder/generator in a welding mode or a battery mode). The front panel also includes an electrical connector (welding output connector) 142 to connect a welding gun, torch, or stick electrode and workpiece to the welder/generator 100 via welding cables.

The front panel further includes an electrical connector (battery output connector) 152 to connect a battery to the welder/generator 100 (welding system) via battery cables. The battery output connector 152 may be used to jump a battery (e.g. of a vehicle) or charge the battery via the battery cables. The welder/generator 100 provides battery jump power or battery charge power to the battery output connector 152 during a battery mode (e.g., a battery jump mode or a battery charging mode) of the welder/generator 100. The welder/generator 100 provides welding power to the welding output connector 142 during a welding mode of the welder/generator 100. In accordance with one embodiment, the battery cables are configured such that the battery cables cannot be connected to the welding output connector 142. Similarly, the welding cables are configured such that the welding cables cannot be connected to the battery output connector 152.

FIG. 2 illustrates a first embodiment of a welding system 200 configured to determine an unsafe condition of a welding power source of the welding system 200. The unsafe condition may involve, for example, providing electrical power at a battery output of the welding system 200 when trying to weld. In one embodiment, the welding system 200 may be an engine-driven welding system similar to that of FIG. 1, or a welding system that plugs into the electrical grid, for example.

The welding system 200 of FIG. 2 includes a welding power source 210. The welding power source 210 includes power electronics 220, a controller 230 having safety logic 235, and a display screen 240. The power electronics 220 may be an inverter-type, a chopper-type, or some combination thereof, for example. The controller 230 may include a processor and memory and/or other control circuitry suitable for controlling the welding system 200 at least as described herein. The welding system 200 also includes a welding output connector 250 (e.g., welding studs) operatively connected to the power electronics 220 and a battery output connector 260 operatively connected to the power electronics 220. The controller 230 is operatively connected to the power electronics 220 and the display screen 240.

The welding system 200 also includes a set of welding cables 270 which are configured to connect between the welding output connector 250 and a welding electrode (e.g., provided by a gun/torch/stick) and a workpiece. The welding system 200 also includes a set of battery cables 280 which are configured to connect between the battery output connector 260 and a battery (e.g., of a vehicle). The welding system 200 also includes a current sensor 290 configured to operatively connect to the controller 230 and sense electrical current flowing through the battery cables 280.

In one embodiment, the power electronics 220 is configured to provide welding power at the welding output connector 250 when the welding system 200 is in a welding mode. Similarly, the power electronics 220 is configured to provide battery power (e.g., battery jump power or battery charge power) at the battery output connector 260 when the welding system 200 is in a battery mode (e.g., a battery jump mode or a battery charging mode). In general, during safe operation, the power electronics 220 should not provide power to the battery output connector 260 during a welding mode, and the power electronics 220 also should not provide power to the welding output connector 250 during a battery mode, in accordance with one embodiment.

The current sensor 290 includes a precision resistor shunt configured to mount on or near the battery output cables 280. In another embodiment, the current sensor 290 may include a hall-effect sensor configured to mount on or near the battery output cables 280. In yet another embodiment, the current sensor 290 may include a reed switch configured to mount on or near the battery output cables 280. Other types of current sensors 290 may be possible as well. In one embodiment, the current sensor 290 is configured to detect or sense an electrical current flowing through the battery cables 280 and generate a voltage in response to sensing the electrical current. The level of the voltage output by the current sensor 290 may vary with the level of the sensed electrical current (e.g., as the voltage is derived from the electrical current). The voltage (or, for example, a digital representation of the voltage) may be provided to the controller 230 via a wired connection in accordance with one embodiment, and via a wireless connection in accordance with another embodiment, for example.

The safety logic 235 of the controller 230 is configured to determine when an unsafe condition of the welding power source 210 exists based, in part, on the voltage provided by the current sensor 290. Again, the unsafe condition includes providing electrical power at the battery output connector 260 of the welding system 200 when trying to weld during a welding mode. In general, during a welding mode, no or little electrical current should be detected in the battery cables 280 by the current sensor 290, in accordance with one embodiment.

Sensing an unexpected amount of electrical current in the battery cables 280 during a welding mode may be indicative of a battery being connected to the battery output connector 260 via the battery cables 280, or indicative of a problem with the power electronics 220. For example, the controller 230 may determine that the voltage output by the current sensor is above a set threshold level, indicating an unexpected amount of electrical current in the battery cables 280. Whether a battery is connected during a welding mode or there is a problem with the power electronics, the welding power source 210 may present an unsafe condition to a user. As a result, in accordance with one embodiment, the controller 230 is configured to shut down the power electronics 220 when the safety logic 235 determines that the unsafe condition exists.

Also, the controller 230 is configured to send a message to be displayed on the display screen 240 to the user when the unsafe condition is determined to exist, in accordance with one embodiment. The message may indicate, for example, that an unsafe condition exists, that the power electronics 220 has been shut down, and that the user should carefully proceed to remedy or eliminate the unsafe condition according to a manufacturer trouble-shooting procedure. In one embodiment, the manufacturer trouble-shooting procedure may be displayed to the user on the display screen 240 to aid the user in fixing the problem. For example, the user may be directed to check whether a battery is connected to the battery output connector 260 and, if so, disconnect the battery from the battery output connector 260. The user may also or alternatively be directed to run a diagnostic on the power electronics 220 of the welding power source 210.

In one embodiment, the welding power source 210 includes a user input 295 (e.g., a push-button or an icon displayed on the display screen 240) configured to indicate to the controller 230, when activated by the user, that the user believes that the unsafe condition has been eliminated. The controller 230 is configured to, upon receiving a user input signal in response to the user activating the user input 295, check again for an unsafe condition via the current sensor 290. If the unsafe condition no longer exists, the user may proceed to weld in a welding mode, where the welding mode was previously selected, for example, by the user.

In one embodiment, the power electronics 220 is configured to apply a test voltage to the battery output connector 260. The test voltage is applied before the current sensor 290 attempts to sense when an electric current is flowing through the battery cables 280, and before the voltage derived from the sensed electric current is provided to the controller 230. In this way, the welding power source 210 can proactively try to determine if a complete electrical path exists between the two terminals of the battery output connector 260 (e.g., due to the battery output connector 260 being connected to a battery via the battery cables 280), creating an unsafe condition. Again, if an unsafe condition is determined to exist, the power electronics 220 may be shut down, at least with respect to providing a welding power during a welding mode or a battery power during a battery mode.

In this manner, an unsafe condition of the welding power source 200 can be determined to exist (or at least potentially exist) during a welding mode, and the power electronics 220 can be shut down until the problem is remedied. A relatively inexpensive and reliable current sensor 290 may be used, in conjunction with a controller 230 having safety logic 235, to determine the unsafe condition and shut down the power electronics 220. In this way, a user of the welding system 200 can be protected.

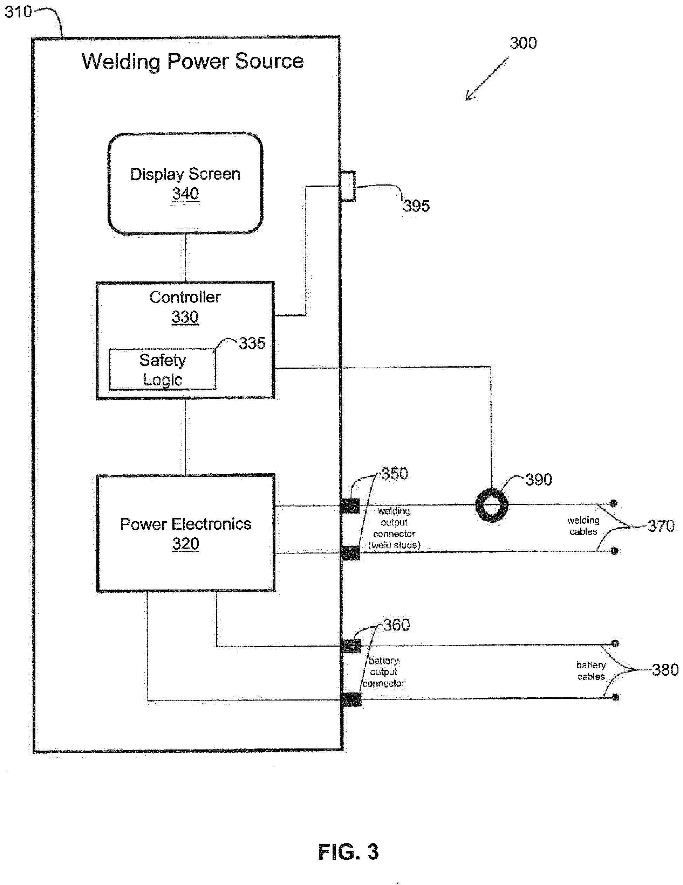

FIG. 3 illustrates a second embodiment of a welding system 300 configured to determine an unsafe condition of a welding power source 310 of the welding system 300. The welding system 300 of FIG. 3 is similar to the welding system 200 of FIG. 2, except that a current sensor is used to monitor the welding cables instead of the battery cables during a battery mode of the welding system 300.

In the welding system 300 of FIG. 3, the unsafe condition may involve, for example, providing electrical power at a welding output of the welding system 300 when trying to jump or charge a battery (e.g., of a vehicle). In one embodiment, the welding system 300 may be an engine-driven welding system similar to that of FIG. 1, or a welding system that plugs into the electrical grid, for example. The welding system 300 of FIG. 3 includes a welding power source 310. The welding power source 310 includes power electronics 320, a controller 330 having safety logic 335, and a display screen 340. The welding system 300 also includes a welding output connector 350 (e.g., welding studs) operatively connected to the power electronics 320 and a battery output connector 360 operatively connected to the power electronics 320. The controller 330 is operatively connected to the power electronics 320 and the display screen 340.

The welding system 300 also includes a set of welding cables 370 which are configured to connect between the welding output connector 350 and a welding electrode (e.g., provided by a gun/torch/stick) and a workpiece. The welding system 300 also includes a set of battery cables 380 which are configured to connect between the battery output connector 360 and a battery (e.g., of a vehicle). The welding system 300 also includes a current sensor 390 configured to operatively connect to the controller 330 and sense electrical current flowing through the welding cables 370.

In one embodiment, the power electronics 320 is configured to provide welding power at the welding output connector 350 when the welding system 300 is in a welding mode. Similarly, the power electronics 320 is configured to provide battery power (e.g., battery jump power or battery charge power) at the battery output connector 360 when the welding system 300 is in a battery mode (e.g., a battery jump mode or a battery charging mode). In general, during safe operation, the power electronics 320 should not provide power to the battery output connector 360 during a welding mode, and the power electronics 320 also should not provide power to the welding output connector 350 during a battery mode, in accordance with one embodiment.

The current sensor 390 includes a precision resistor shunt, a hall-effect sensor, or a reed switch configured to mount on or near the welding output cables 370. Other types of current sensors 390 may be possible as well. In one embodiment, the current sensor 390 is configured to detect or sense an electrical current flowing through the welding cables 370 and generate a voltage in response to sensing the electrical current. The level of the voltage output by the current sensor 390 may vary with the level of the sensed electrical current (e.g., as the voltage is derived from the electrical current). Again, the voltage (or, for example, a digital representation of the voltage) may be provided to the controller 330 via a wired connection in accordance with one embodiment, and via a wireless connection in accordance with another embodiment, for example.

The safety logic 335 of the controller 330 is configured to determine when an unsafe condition of the welding power source 310 exists based on the voltage provided by the current sensor 390. In one embodiment, the unsafe condition may include, for example, providing electrical power at the welding output connector 350 of the welding system 300 when trying to jump or charge a battery during a battery mode. In general, during a battery mode, no or little electrical current should be detected in the welding cables 370 by the current sensor 390, in accordance with one embodiment.

Sensing an unexpected amount of electrical current in the welding cables 370 during a battery mode may be indicative of a welding electrode and workpiece being connected to the welding output connector 350 via the welding cables 370, or indicative of a problem with the power electronics 320. For example, the controller 330 may determine that the voltage output by the current sensor 390 is above a set threshold level, indicating an unexpected amount of electrical current in the welding cables 370. Whether a welding electrode and workpiece is connected during a battery mode or there is a problem with the power electronics, the welding power source 310 may present an unsafe condition to a user. As a result, in accordance with one embodiment, the controller 330 is configured to shut down the power electronics 320 when the safety logic 335 determines that the unsafe condition exists.

The controller 330 is configured to send a message to be displayed on the display screen 340 to the user when the unsafe condition is determined to exist, in accordance with one embodiment. The message may indicate, for example, that an unsafe condition exists, that the power electronics has been shut down, and that the user should carefully proceed to remedy or eliminate the unsafe condition according to a manufacturer trouble-shooting procedure. In one embodiment, the manufacturer trouble-shooting procedure may be displayed to the user on the display screen 340 to aid the user in fixing the problem. For example, the user may be directed to check whether a welding gun/torch/stick and workpiece are connected to the welding output connector 350 and, if so, disconnect the welding/gun torch and workpiece from the welding output connector 350. The user may also or alternatively be directed to run a diagnostic on the power electronics 320 of the welding power source 310.

In one embodiment, the welding power source 310 includes a user input 395 (e.g., a push-button or an icon displayed on the display screen 340) configured to indicate to the controller 330, when activated by the user, that the user believes that the unsafe condition has been eliminated. The controller 330 is configured to, upon receiving a user input signal in response to the user activating the user input 395, check again for an unsafe condition via the current sensor 390. If the unsafe condition no longer exists, the user may proceed to use the welding system 300 in a battery mode, where the battery mode was previously selected, for example, by the user.

In one embodiment, the power electronics 320 is configured to apply a test voltage to the welding output connector 350. The test voltage is applied before the current sensor 390 attempts to sense when an electric current is flowing through the welding cables 370, and before the voltage derived from the sensed electric current is provided to the controller 330. In this way, the welding power source 310 can proactively try to determine if a complete electrical path exists between the two terminals of the welding output connector 350 (e.g., due to the welding output connector 350 being connected to a welding gun/torch/stick and workpiece, used to weld, via the welding cables 370), creating an unsafe condition. Again, if an unsafe condition is determined to exist, the power electronics 320 may be shut down, at least with respect to providing a welding power during a welding mode or a battery power during a battery mode.

In this manner, an unsafe condition of the welding power source 300 can be determined to exist (or at least potentially exist) during a battery mode, and the power electronics 320 can be shut down until the problem is remedied. A relatively inexpensive and reliable current sensor 390 may be used, in conjunction with a controller 330 having safety logic 335, to determine the unsafe condition and shut down the power electronics 320. In this way, a user of the welding system 300 can be protected.

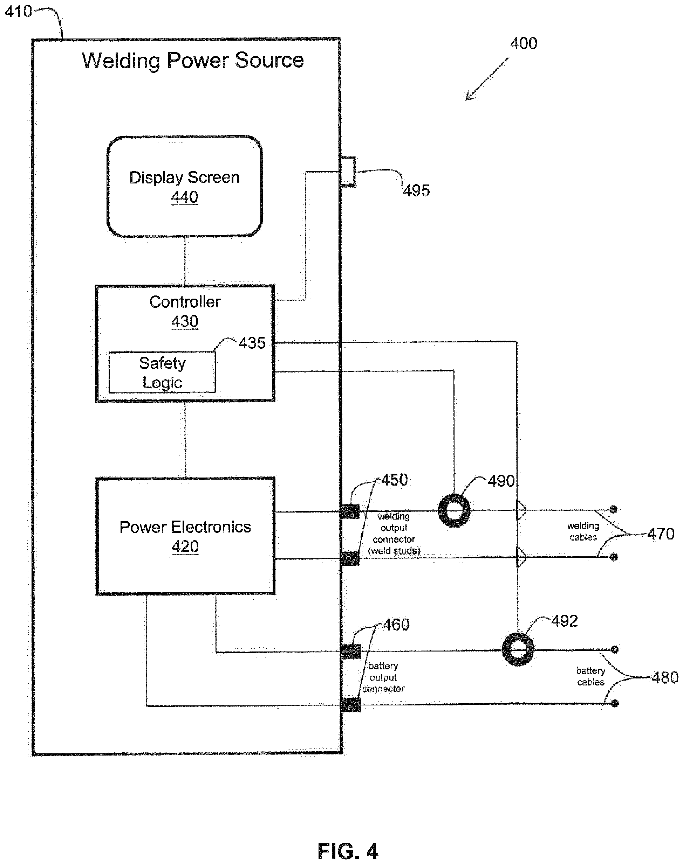

FIG. 4 illustrates a third embodiment of a welding system 400 configured to determine an unsafe condition of a welding power source 410 of the welding system 400. The unsafe condition may involve, for example, providing electrical power at a battery output of the welding system 400 when trying to weld, or providing electrical power at a welding output of the welding system 400 when trying to jump or charge a battery. In one embodiment, the welding system 400 may be an engine-driven welding system similar to that of FIG. 1, or a welding system that plugs into the electrical grid, for example. The welding system 400 of FIG. 4 includes a welding power source 410. The welding power source 410 includes power electronics 420, a controller 430 having safety logic 435, and a display screen 440. The welding system 400 also includes a welding output connector 450 (e.g., welding studs) operatively connected to the power electronics 420 and a battery output connector 460 operatively connected to the power electronics 420. The controller 430 is operatively connected to the power electronics 420 and the display screen 440.

The welding system 400 also includes a set of welding cables 470 which are configured to connect between the welding output connector 450 and a welding electrode (e.g., provided by a gun/torch/stick) and a workpiece. The welding system 400 also includes a set of battery cables 480 which are configured to connect between the battery output connector 460 and a battery (e.g., of a vehicle). The welding system 400 also includes a first current sensor 490 configured to operatively connect to the controller 430 and sense electrical current flowing through the welding cables 470, and a second current sensor 492 configured to operatively connect to the controller 430 and sense electrical current flowing through the battery cables 480.

In one embodiment, the power electronics 420 is configured to provide welding power at the welding output connector 450 when the welding system 400 is in a welding mode. Similarly, the power electronics 420 is configured to provide battery power (e.g., battery jump power or battery charge power) at the battery output connector 460 when the welding system 400 is in a battery mode (e.g., a battery jump mode or a battery charging mode). In general, during safe operation, the power electronics 420 should not provide power to the battery output connector 460 during a welding mode, and the power electronics 420 also should not provide power to the welding output connector 450 during a battery mode, in accordance with one embodiment.

In one embodiment, the first current sensor 490 and the second current sensor 492 may each include a precision resistor shunt, a hall-effect sensor, or a reed switch configured to mount on or near the welding output cables 470 and the battery output cables 480, respectively. In other embodiments, one type of current sensor may be used on or near the welding cables 470 and another type of current sensor may be used on or near the battery cables 480. Other types of current sensors may be possible as well, in accordance with other various embodiments.

In one embodiment, the first current sensor 490 is configured to detect or sense an electrical current flowing through the welding cables 470 and generate a first voltage in response to sensing the electrical current. The second current sensor 492 is configured to detect or sense an electrical current flowing through the battery cables 480 and generate a second voltage in response to sensing the electrical current. The level of the voltage outputs by the current sensors 490 and 492 may vary with the level of the sensed electrical currents (e.g., as the first and second voltages are derived from the respective electrical currents). The first and second voltages (or, for example, a digital representations of the voltages) may be provided to the controller 430 via wired connections in accordance with one embodiment, and via wireless connections in accordance with another embodiment, for example.

The safety logic 435 of the controller 430 is configured to determine when an unsafe condition of the welding power source 210 exists based on at least one of the first and second voltages provided by the current sensors 490 and 492. Again, in one embodiment, the unsafe condition may include, for example, providing electrical power at the battery output connector 460 of the welding system 400 when trying to weld during a welding mode, or providing electrical power at the welding output connector 450 of the welding system 400 when trying to jump or charge a battery during a battery mode. In general, during a welding mode, no or little electrical current should be detected in the battery cables 480 by the current sensor 492 and, during a battery mode, no or little electrical current should be detected in the welding cables 470 by the current sensor 490, in accordance with one embodiment.

Sensing an unexpected amount of electrical current in the battery cables 480 during a welding mode may be indicative of a battery being connected to the battery output connector 460 via the battery cables 480, or indicative of a problem with the power electronics 420. For example, the controller 430 may determine that the voltage output by the current sensor 492 is above a set threshold level, indicating an unexpected amount of electrical current in the battery cables 480. Whether a battery is connected during a welding mode or there is a problem with the power electronics 420, the welding power source 410 may present an unsafe condition to a user. As a result, in accordance with one embodiment, the controller 430 is configured to shut down the power electronics 420 when the safety logic 435 determines that the unsafe condition exists.

Similarly, sensing an unexpected amount of electrical current in the welding cables 470 during a battery mode may be indicative of a gun/torch/stick and workpiece being connected to the welding output connector 450 (for welding) via the welding cables 470, or indicative of a problem with the power electronics 420. For example, the controller 430 may determine that the voltage output by the current sensor 490 is above a set threshold level, indicating an unexpected amount of electrical current in the welding cables 470. Whether a gun/torch/stick and workpiece are connected during a battery mode or there is a problem with the power electronics 420, the welding power source 410 may present an unsafe condition to a user. As a result, in accordance with one embodiment, the controller 430 is configured to shut down the power electronics 420 when the safety logic 435 determines that the unsafe condition exists.

Also, the controller 430 is configured to send a message to be displayed on the display screen 440 to the user when an unsafe condition is determined to exist, in accordance with one embodiment. The message may indicate, for example, that an unsafe condition exists, that the power electronics 420 has been shut down, and that the user should carefully proceed to remedy or eliminate the unsafe condition according to a manufacturer trouble-shooting procedure. In one embodiment, the manufacturer trouble-shooting procedure may be displayed to the user on the display screen 440 to aid the user in fixing the problem. For example, the user may be directed to check whether a battery is connected to the battery output connector 460 and, if so, disconnect the battery from the battery output connector 460. Alternatively or in addition, the user may be directed to check whether a gun/torch/stick and workpiece is connected to the welding output connector 450 and, if so, disconnect the gun/torch/stick and workpiece from the welding output connector 450. The user may also or alternatively be directed to run a diagnostic on the power electronics 420 of the welding power source 410.

In one embodiment, the welding power source 410 includes a user input 495 (e.g., a push-button or an icon displayed on the display screen 440) configured to indicate to the controller 430, when activated by the user, that the user believes that the unsafe condition has been eliminated. The controller 430 is configured to, upon receiving a user input signal in response to the user activating the user input 495, check again for an unsafe condition via the current sensors 490 and 492. If the unsafe condition no longer exists, the user may proceed to weld in a welding mode or jump or charge a battery in a battery mode, where the welding mode or the battery mode was previously selected, for example, by the user.

In one embodiment, when a welding mode is selected, the power electronics 420 is configured to apply a test voltage to the battery output connector 460. The test voltage is applied before the current sensor 492 attempts to sense when an electric current is flowing through the battery cables 480, and before the voltage derived from the sensed electric current is provided to the controller 430. In this way, the welding power source 410 can proactively try to determine if a complete electrical path exists between the two terminals of the battery output connector 460 (e.g., due to the battery output connector 460 being connected to a battery via the battery cables 480), creating an unsafe condition.

In one embodiment, when a battery mode is selected, the power electronics 420 is configured to apply a test voltage to the welding output connector 450. The test voltage is applied before the current sensor 490 attempts to sense when an electric current is flowing through the welding cables 470, and before the voltage derived from the sensed electric current is provided to the controller 430. In this way, the welding power source 410 can proactively try to determine if a complete electrical path exists between the two terminals of the welding output connector 450 (e.g., due to the welding output connector 450 being connected to a gun/torch/stick and workpiece, used to weld, via the welding cables 470), creating an unsafe condition. Again, if an unsafe condition is determined to exist, the power electronics 420 may be shut down, at least with respect to providing a welding power during a welding mode or a battery power during a battery mode.

In this manner, an unsafe condition of the welding power source 400 can be determined to exist (or at least potentially exist) during both a welding mode and a battery mode, and the power electronics 420 can be shut down until the problem is remedied. Relatively inexpensive and reliable current sensors 490 and 492 may be used, in conjunction with a controller 430 having safety logic 435, to determine an unsafe condition and shut down the power electronics 420. In this way, a user of the welding system 400 can be protected.

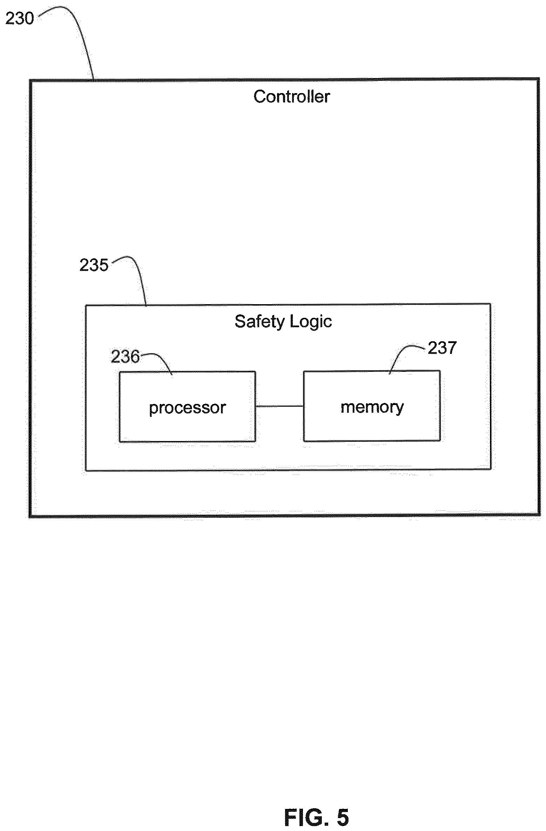

FIG. 5 illustrates a first embodiment of the controller 230 of the welding system 200 of FIG. 2 having the safety logic 235. The first embodiment of the controller 230 in FIG. 5 is also representative of a first embodiment of the controller 330 in FIG. 3 and the controller 430 in FIG. 4. In the first embodiment of the controller 230, the safety logic 235 includes a processor 236 and a memory 237. The memory 237 is configured to store computer-executable instructions which can be loaded from the memory 237 into the processor 236 and executed by the processor 236 to perform a safety function. For example, the computer-executable instructions may provide the safety function logic of shutting down the power electronics 220 when the welding system 200 is in a welding mode and the current sensor 290 senses an unexpected electrical current in the battery cables 280.

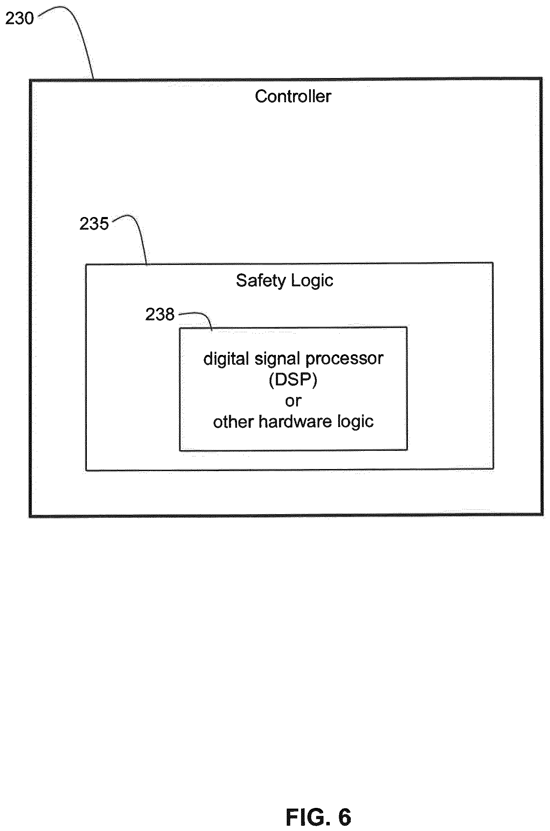

FIG. 6 illustrates a second embodiment of the controller 230 of the welding system 200 of FIG. 2 having the safety logic 235. The second embodiment of the controller 230 in FIG. 6 is also representative of a second embodiment of the controller 330 in FIG. 3 and the controller 430 in FIG. 4. In the second embodiment of the controller 230, the safety logic 235 includes circuit hardware in the form of a digital signal processor (DSP) 238. The DSP 238 is configured to perform a safety function. For example, the DSP 238 may provide the safety function logic of shutting down the power electronics 220 when the welding system 200 is in a welding mode and the current sensor 290 senses an unexpected electrical current in the battery cables 280. In other embodiments, the circuit hardware may include, for example, digital logic circuits and/or analog electronic circuitry. Still other various embodiments of the safety logic 235 may include various combinations of any or all of a processor, a memory, a DSP, digital logic circuits, and analog electronic circuitry.

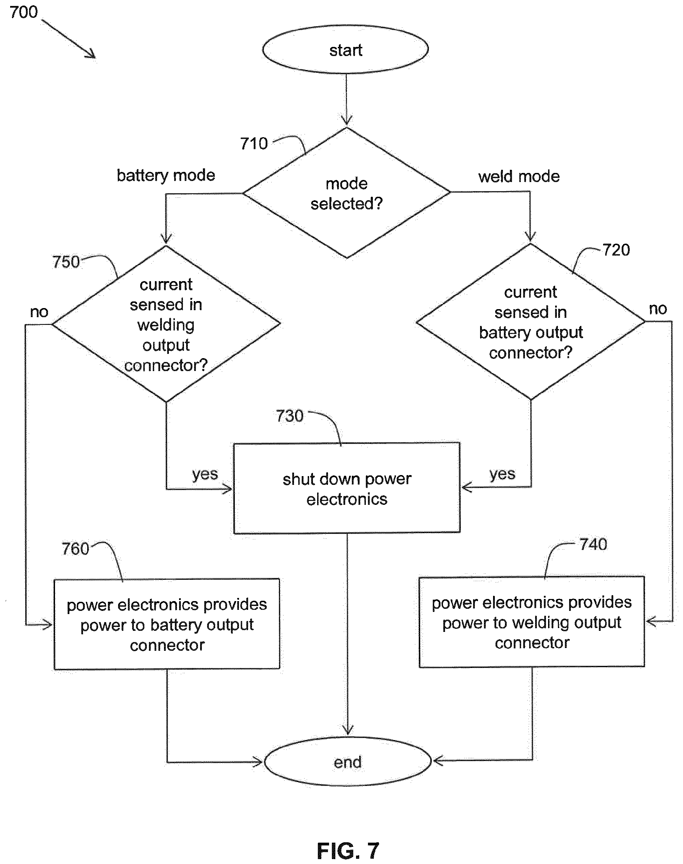

FIG. 7 illustrates a flow chart of a method 700 which can be implemented, at least in part, in the welding systems 100-400 of FIGS. 1-4 to determine an unsafe condition of a welding power source. At 710, a selected mode within the welding power source is determined (e.g., via a controller of the welding power source) as being a welding mode or a battery mode. The welding mode may be one of several welding modes available for selection. The battery mode may be one of a battery jump mode (e.g., to jump a battery of a vehicle) or a battery charging mode (e.g., to charge a battery of a vehicle) available for selection.

When the selected mode is determined to be a welding mode then, at 720, a determination is made (e.g., via the controller of the welding power source) whether an unexpected electrical current has been sensed (detected) as flowing through a battery cable connected to a battery output connector of the welding power source. When an unexpected electrical current has been determined to be flowing through the battery cable then, at 730, the power electronics of the welding power source is shut down (e.g., via the controller of the welding power source). When an unexpected electrical current has not been determined to be flowing through the battery cable then, at 740, the power electronics of the welding power source proceeds to provide welding output power (based on the selected welding mode) to the welding output connector of the welding power source such that welding can commence.

When, at 710, the selected mode is determined to be a battery mode then, at 750, a determination is made (e.g., via the controller of the welding power source) whether an unexpected electrical current has been sensed (detected) as flowing through a welding cable connected to a welding output connector of the welding power source. When an unexpected electrical current has been determined to be flowing through the welding cable then, at 730, the power electronics of the welding power source is shut down (e.g., via the controller of the welding power source). When an unexpected electrical current has not been determined to be flowing through the welding cable then, at 760, the power electronics of the welding power source proceeds to provide a battery jump or charging power (based on the selected battery mode) to the battery output connector of the welding power source such that jumping or charging of the battery can commence.

The entirety of the method 700 may be implemented in the welding system 400 of FIG. 4. Steps 710, 720, 730 and 740 of the method 700 may be implemented in the welding system 200 of FIG. 2. Steps, 710, 730, 750, and 760 may be implemented in the welding system 300 of FIG. 3. Other variations of the method 700 may be implemented in other welding systems, in accordance with other various embodiments.

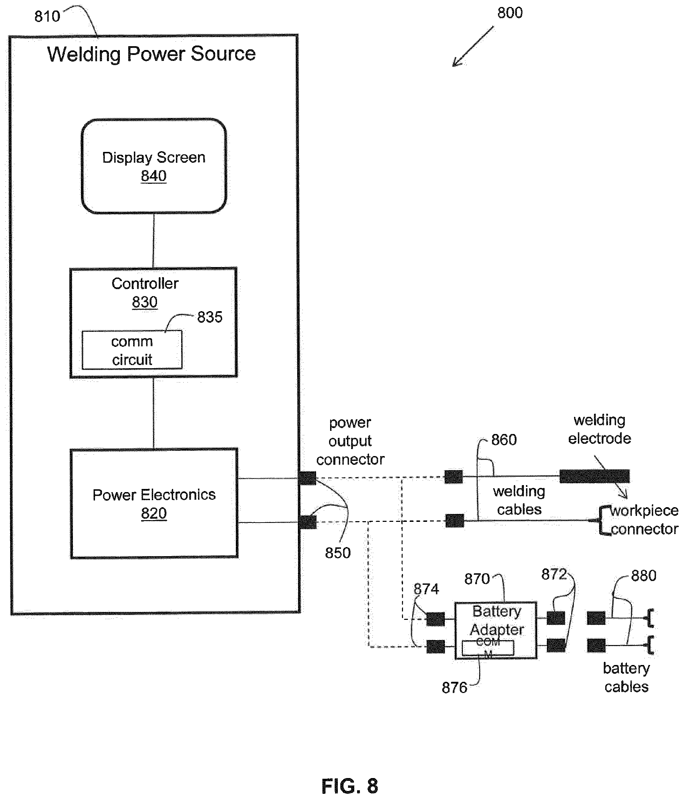

FIG. 8 illustrates an alternative embodiment of a welding system 800 configured to prevent an unsafe condition from occurring in a welding power source 810 of the welding system 800. The unsafe condition may involve, for example, providing battery power at a power output of the welding system 800 when trying to weld, or providing welding power at the power output of the welding system when trying to jump or charge a battery. In one embodiment, the welding system 800 may be an engine-driven welding system similar to that of FIG. 1, or a welding system that plugs into the electrical grid, for example.

The welding system 800 of FIG. 8 includes a welding power source 810. The welding power source 810 includes power electronics 820, a controller 830 having a first communication circuit 835, and a display screen 840. The welding system 800 also includes a power output connector 850 operatively connected to the power electronics 820. The controller 830 is operatively connected to the power electronics 820 and the display screen 840. In one embodiment, the power electronics 820 is configured to provide welding power at the power output connector 850 during a welding mode, and battery jump power or battery charging power at the power output connector 850 during a battery mode.

The welding system 800 also includes a set of welding cables 860 which are configured to connect between the power output connector 850 and a welding electrode (e.g., provided by a welding gun, torch, or stick) and a workpiece during a welding mode to create an arc between the welding electrode and the workpiece. The welding system 800 also includes a battery adapter 870 and a set of battery cables 880. The battery cables 880 are configured to connect between the battery adapter 870 (at a battery output connector 872 of the battery adapter 870) and a battery (e.g., of a vehicle). The battery adapter 870 also includes a battery input connector 874 configured to connect to the power output connector 850 when the welding cables 860 are not connected. Therefore, the battery adapter 870 and the battery cables 880 are configured to connect between the power output connector 850 and a battery during a battery mode to provide battery jump power or battery charging power to the battery.

The battery adapter 870 includes a second communication circuit 876 configured to communicate with the first communication circuit 835 of the controller 830. In one embodiment, the second communication circuit 876 communicates to the first communication circuit 835 to inform the first communication circuit 835 (and, therefore, the controller 830) when the battery adapter 870 is connected to the power output connector 850. In accordance with some embodiments, the first communication circuit 835 and the second communication circuit 876 communicate with each other via at least one of radio frequency identification (RFID) technology, Bluetooth® technology, or CrossLinc™ technology. CrossLinc™ is a propriety communication technology of The Lincoln Electric Company of Cleveland, Ohio.

The battery adapter 870 is configured to pass the battery jump power or the battery charging power from the battery input connector 874 to the battery output connector 872 when the battery input connector 874 is connected to the power output connector 850 during a battery mode of the welding system 800. In one embodiment, the battery jump power or the battery charging power is unaffected when passed through the battery adapter 870. In another embodiment, the battery adapter 870 is configured to filter the battery jump power or the battery charging power to provide a more stable power at the battery output connector 872.

In accordance with one embodiment, the controller 830 will not allow the power electronics 820 to provide welding power to the power output connector 850 when the battery adapter 870 is connected to the power output connector 850. Similarly, the controller 830 will not allow the power electronics 820 to provide battery power to the power output connector 850 when the battery adapter 870 is not connected to the power output connector 850. To emphasize, the battery adapter 870 and the welding cables 860 cannot be connected to the power output connector 850 at the same time.

In one embodiment, when a user selects a welding mode on the welding power source 810 with the battery adapter 876 connected to the power output connector 850, the controller 820 will shut down the power electronics 820 and display a message to the user on the display screen 840 indicating the incompatible configuration. Similarly, when a user selects a battery mode on the welding power source 810 with the battery adapter 876 disconnected from the power output connector 850, the controller 820 will shut down the power electronics 820 and display a message to the user on the display screen 840 indicating the incompatible configuration.

In this manner, welding power, corresponding to a selected welding mode, can be provided to the power output connector 850 only when the battery adapter 870 is not connected. Furthermore, battery power, corresponding to a selected battery mode (e.g., jump or charge) can be provided to the power output connector 850 only when the battery adapter 870 is connected. In this way, the unsafe condition of providing the wrong power at the power output connector 850 at the wrong time can be prevented.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed. For example, alternative methods and/or systems with additional or alternative components may be utilized to configure a welding system using current sensors and/or adapters to prevent an unsafe condition from occurring. It is sought, therefore, to cover all such changes and modifications as fall within the scope of the general inventive concepts, as defined by the appended claims.

**REFERENCE NUMBERS**

| | | | |
|---|---|---|---|
| 100 | welder/ generator | 237 | memory |
| 110 | housing | 240 | display screen |
| 112 | top portion | 250 | welding output connector |
| 114 | side portion | 260 | battery output connector |
| 116 | side portion | 270 | welding cable |
| 118 | backside | 280 | cable |
| 130 | front panel | 290 | current sensor |
| 132 | gauge | 300 | welding system |
| 134 | gauge | 310 | power source |
| 136 | gauge | 320 | power electronic |
| 140 | exhaust pipe | 330 | controller |
| 142 | connector | 335 | safety logic |
| 147 | fluid access | 340 | display screen |
| 148 | fluid access | 350 | welding output connector |
| 152 | connector | 360 | battery output connector |
| 157 | lift devide | 370 | welding cable |
| 158 | opening | 380 | battery cable |
| 170 | grommet | 390 | current sensor |
| 178 | fuel cap | 395 | user input |
| 200 | welding system | 400 | welding system |
| 210 | power source | 410 | power source |
| 220 | power electronic | 420 | power electronic |
| 230 | controller | 430 | controller |
| 235 | safety logic | 435 | safety logic |
| 236 | processor | 440 | display screen |
| 450 | welding output connector | 810 | power source |
| 460 | battery output connector | 820 | power electronic |
| 470 | welding cable | 830 | controller |
| 480 | battery cable | 835 | circuit |
| 490 | first current sensor | 840 | display screen |
| 492 | second current sensor | 850 | welding output connector |
| 495 | user input | 860 | battery output welding cable |
| 700 | method | 870 | battery adapter |
| 710 | step | 872 | connector |
| 720 | step | 874 | connector |
| 730 | step | 876 | circuit |
| 740 | step | 880 | cable |
| 750 | step | | |
| 760 | step | | |
| 800 | welding system | | |

## Claims

1. A method of determining an unsafe condition of a welding power source (210, 310, 410, 810) having a welding output connector (250, 350, 450, 850) and a battery output connector (260, 360, 460, 860), the method comprising:
determining, via a controller of the welding power source, a selected mode within the welding power source as being a welding mode or a battery mode;
determining, via the controller of the welding power source, when at least one electric current is flowing through at least one cable connected to at least one of a welding output connector of the welding power source or a battery output connector of the welding power source by ;
detecting that the at least one electric current is flowing through the at least one cable connected to at least one of the welding output connector of the welding power source or the battery output connector of the welding power source via at least one of a precision resistor shunt, a hall-effect sensor, or a reed switch
determining, via the controller of the welding power source, that a first unsafe condition of the welding power source exists when the selected mode is determined to be the welding mode and when the at least one electric current is determined to be flowing through the at least one cable connected to the battery output connector;
shutting down, via the controller of the welding power source, a power electronics of the welding power source in response to determining that the first unsafe condition of the welding power source exists, wherein the power electronics is configured to provide welding power at the welding output connector during the welding mode.

2. The method according to claim 1, further comprising communicating the detecting to the controller of the welding power source as a voltage.

3. The method of claim 1 or 2, wherein the battery mode is one of a battery jump mode or a battery charging mode.

4. The method of any of claims 1 to 3, further comprising:
determining, via the controller of the welding power source, that a second unsafe condition of the welding power source exists when the selected mode is determined to be the battery mode and when the at least one electric current is determined to be flowing through the at least one cable connected to the welding output connector; and
shutting down, via the controller of the welding power source, the power electronics of the welding power source in response to determining that the second unsafe condition of the welding power source exists, wherein the power electronics is configured to provide at least one of battery jump power or battery charge power at the battery output connector during the battery mode.

5. The method of claim 4, further comprising:
generating a message, via the controller of the welding power source, indicating the second unsafe condition; and
displaying the message, provided by the controller of the welding power source, on a display screen of the welding power source, and/or
further comprising indicating to the controller of the welding power source, via a user input, that the user believes that the unsafe condition has been eliminated.

6. A welding power source (210, 310, 410, 810), comprising:
a welding output connector (250, 350, 450, 850);
a battery output connector (260, 360, 460, 860);
power electronics (220, 320, 420, 820) configured to provide welding power at the welding output connector (250, 350, 450, 850) and battery jump power or battery charge power at the battery output connector (260, 360, 460, 860);
a controller (230, 330, 430, 830) including a safety logic (235, 335, 435), wherein the safety logic (235, 335, 435) includes at least one of:
circuit hardware, or
computer-executable instructions stored in a memory and a processor for executing the computer-executable instructions; and
at least one current sensor (290, 390, 490, 492), wherein the current sensor is at least one of a precision resistor shunt, a hall-effect sensor, or a reed switch, configured to:
sense when at least one electric current is flowing through at least one cable connected to at least one of the welding output connector (250, 350, 450, 850) or the battery output connector (260, 360, 460, 860), and
provide at least one voltage, derived from the at least one electric current as sensed, to the controller (230, 330, 430, 830),
wherein the safety logic (235, 335, 435) of the controller is configured to determine when an unsafe condition of the welding power source (210, 310, 410, 810) exists based on at least the at least one voltage, such that the safety logic of the controller is adapted to carry out a method according to any of the claims 1 to 5.

7. The welding power source (210, 310, 410, 810) of claim 6, wherein the power electronics (220, 320, 420, 820) is configured to apply a test voltage to at least one of the welding output connector (250, 350, 450, 850) or the battery output connector (260, 360, 460, 860) before the at least one current sensor (290, 390, 490, 492) senses when the at least one electric current is flowing through the at least one cable connected to at least one of the welding output connector (250, 350, 450, 850) or the battery output connector (260, 360, 460, 860), and before providing the at least one voltage, derived from the at least one electric current as sensed, to the controller (230, 330, 430, 830).

8. The welding power source (210, 310, 410, 810) of claim 7 or 8,
wherein the circuit hardware includes a digital signal processor, and/or
wherein the circuit hardware includes a combination of digital logic circuits, and/or wherein the circuit hardware includes analog electronic circuitry.

9. The welding power source (210, 310, 410, 810) of any of the claims 7 to 8, further comprising a display screen (240, 340, 440, 840) configured to display a message provided by the controller (230, 330, 430, 830) indicating the unsafe condition, and/or
further comprising a user input (395, 495) configured to, when activated by a user, indicate to the controller (230, 330, 430, 830) that the user believes that the unsafe condition has been eliminated.

10. The welding power source (210, 310, 410, 810) of any of the claims 7 to 10, wherein the welding power source (210, 310, 410, 810) is part of an engine-driven welding system (200, 300, 400, 800).

## Patentansprüche

1. Verfahren zum Bestimmen eines unsicheren Zustands einer Schweißstromquelle (210, 310, 410, 810) mit einem Schweißausgangsanschluss (250, 350, 450, 850) und einem Batterieausgangsanschluss (260, 360, 460, 860), wobei das Verfahren umfasst:
Bestimmen eines ausgewählten Modus über eine Steuerung der Schweißstromquelle innerhalb der Schweißstromquelle, wie einen Schweißmodus oder einen Batteriemodus;
Bestimmen über die Steuerung der Schweißstromquelle, wann mindestens ein elektrischer Strom durch mindestens ein Kabel fließt, das mit mindestens einem Schweißausgangsanschluss der Schweißstromquelle oder einem Batterieausgangsanschluss der Schweißstromquelle verbunden ist, durch
Bestimmen über die Steuerung der Schweißstromquelle, dass ein erster unsicherer Zustand der Schweißstromquelle vorliegt, wenn bestimmt wird, dass der ausgewählte Modus der Schweißmodus ist und wenn bestimmt wird, dass der mindestens eine elektrische Strom durch den mindestens ein Kabel, das an den Batterieausgangsanschluss angeschlossen ist fließt;
Abschalten einer Leistungselektronik einer Schweißstromquelle, über die Steuerung der Schweißstromquelle als Reaktion auf das Bestimmen, dass der erste unsichere Zustand der Schweißstromquelle vorliegt, wobei die Leistungselektronik dazu konfiguriert ist um während des Schweißmodus die Schweißleistung am Schweißausgangsanschluss bereitzustellen,
Detektieren, dass der mindestens eine elektrische Strom durch das mindestens eine Kabel fließt, das mit dem Schweißausgangsanschluss der Schweißstromquelle oder dem Batterieausgangsanschluss der Schweißstromquelle über mindestens einen Präzisionswiderstands-Shunt, ein Hall-Effekt-Sensor oder ein Reed-Schalter verbunden ist.

2. Verfahren nach Anspruch 1, ferner umfassend das Übermitteln der Detektion an die Steuerung der Schweißstromquelle als Spannung.

3. Verfahren nach Anspruch 1 oder 2, wobei der Batteriemodus ein Batterie-Jumpmodus oder ein Batterielademodus ist.

4. Verfahren nach einem der Ansprüche 1 bis 3, ferner umfassend:
Bestimmen über die Steuerung der Schweißstromquelle, dass ein zweiter unsicherer Zustand der Schweißstromquelle vorliegt, wenn bestimmt wird, dass der ausgewählte Modus der Batteriemodus ist, und wenn bestimmt wird, dass der mindestens eine elektrische Strom durch mindestens ein Kabel fließt, das mit dem Schweißausgangsanschluss verbunden ist; und
Abschalten der Leistungselektronik der Schweißstromquelle über die Steuerung der Schweißstromquelle als Reaktion auf das Bestimmen, dass der zweite unsichere Zustand der Schweißstromquelle vorliegt, wobei die Leistungselektronik so konfiguriert ist, um mindestens eine von Batterie-Jumpleistung oder Batterieladeleistung am Batterieausgangsanschluss während des Batteriebetriebs bereitzustellen.

5. Verfahren nach Anspruch 4, ferner umfassend:
Erzeugen einer Nachricht über die Steuerung der Schweißstromquelle, die den zweiten unsicheren Zustand anzeigt; und
Anzeigen der Nachricht, die von der Steuerung der Schweißstromquelle bereitgestellt wird, auf einem Anzeigebildschirm der Schweißstromquelle und / oder
ferner umfassend das Anzeigen der Steuerung der Schweißstromquelle über eine Benutzereingabe, dass der Benutzer glaubt, dass der unsichere Zustand beseitigt wurde.

6. Schweißstromquelle (210, 310, 410, 810), umfassend:
einen Schweißausgangsanschluss (250, 350, 450, 850);
einen Batterieausgangsanschluss (260, 360, 460, 860);
Leistungselektronik (220, 320, 420, 820), die konfiguriert ist, um Schweißleistung am Schweißausgangsanschluss (250, 350, 450, 850) und Batteriesprungleistung oder Batterieladeleistung am Batterieausgangsanschluss bereitzustellen (260, 360, 460, 860);
eine Steuerung (230, 330, 430, 830) mit einer Sicherheitslogik (235, 335, 435), wobei die Sicherheitslogik (235, 335, 435) mindestens eines von Folgendem enthält:
Schaltungshardware oder
computerausführbare Anweisungen, die in einem Speicher_ gespeichert sind, und ein Prozessor zum Ausführen der computerausführbaren Anweisungen; und
mindestens einen Stromsensor (290, 390, 490, 492), wobei der Stromsensor mindestens ein Präzisionswiderstands-Shunt, ein Hall-Effekt-Sensor oder ein Reed-Schalter ist, der konfiguriert ist, um:
zu erfassen, wann mindestens ein elektrischer Strom durch mindestens ein Kabel fließt, das mit mindestens einem der Schweißausgangsanschlüsse (250, 350, 450, 850) oder Batterieausgangsanschlüsse (260, 360, 460, 860) verbunden ist, und
der Steuerung (230, 330, 430, 830) mindestens eine Spannung zur Verfügung zu stellen, die aus dem mindestens einen gemessenen elektrischen Strom abgeleitet ist,
wobei die Sicherheitslogik (235, 335, 435) der Steuerung konfiguriert ist, um zu bestimmen, wenn ein unsicherer Zustand der Schweißstromquelle (210, 310, 410, 810) basierend auf mindestens einer der mindestens einen Spannung vorliegt,
so dass die Sicherheitslogik der Steuerung angepasst ist, um ein Verfahren nach einem der Ansprüche 1 bis 5 auszuführen.

7. Schweißstromquelle (210, 310, 410, 810) nach Anspruch 6, wobei die Leistungselektronik (220, 320, 420, 820) konfiguriert ist, um eine Prüfspannung an mindestens einen der Schweißausgangsanschlüsse (250, 350, 450, 850) oder der Batterieausgangsanschlüsse (260, 360, 460, 860) anzulegen, bevor der mindestens eine Stromsensor (290, 390, 490, 492) erfasst, wann der mindestens eine elektrische Strom -durch das mindestens eine Kabel, das mit dem Schweißausgangsanschluss (250, 350, 450, 850) oder dem Batterieausgangsanschluss (260, 360, 460, 860) verbunden ist fließt, und bevor die mindestens eine Spannung bereitgestellt wird, die von dem mindestens einen erfassten elektrischen Strom an die Steuerung (230, 330, 430, 830) abgeleitet wird.

8. Schweißstromquelle (210, 310, 410, 810) nach Anspruch 7 oder 8,
wobei die Schaltungshardware einen digitalen Signalprozessor enthält und / oder
wobei die Schaltungshardware eine Kombination von digitalen Logikschaltungen enthält und / oder
wobei die Schaltungshardware analoge elektronische Schaltungen enthält.

9. Schweißstromquelle (210, 310, 410, 810) nach einem der Ansprüche 7 bis 8, die ferner einen Anzeigebildschirm (240, 340, 440, 840) umfasst, der zum Anzeigen einer von der Steuerung (230, 330, 430, 830) bereitgestellten Nachricht konfiguriert ist, die den unsicheren Zustand anzeigen, und / oder
ferner umfassend eine Benutzereingabe (395, 495), die konfiguriert ist, um bei Aktivierung durch einen Benutzer der Steuerung (230, 330, 430, 830) anzuzeigen, dass der Benutzer glaubt, dass der unsichere Zustand beseitigt wurde.

10. Schweißstromquelle (210, 310, 410, 810) nach einem der Ansprüche 7 bis 10, wobei die Schweißstromquelle (210, 310, 410, 810) Teil eines motorgetriebenen Schweißsystems (200, 300, 400, 800) ist.

## Revendications

1. Procédé de détermination d'un état non sûr d'une source de courant de soudage (210, 310, 410, 810) ayant un connecteur de sortie de soudage (250, 350, 450, 850) et un connecteur de sortie de batterie (260, 360, 460, 860), le procédé comprenant :
de déterminer, par le biais d'une commande de la source de courant de soudage, un mode sélectionné à l'intérieur de la source de courant de soudage comme étant un mode soudage ou un mode batterie ;
de déterminer, par le biais de la commande de la source de courant de soudage, quand au moins un courant électrique circule à travers au moins un câble connecté à au moins un d'un connecteur de sortie de soudage de la source de courant de soudage ou d'un connecteur de sortie de batterie de la source de courant de soudage en détectant que l'au moins un courant électrique circule à travers l'au moins un câble connecté à l'au moins un du connecteur de sortie de soudage de la source de courant de soudage ou du connecteur de sortie de batterie de la source de courant de soudage par le biais d'au moins un shunt à résistance de précision, un capteur à effet hall ou un interrupteur à lames ;
de déterminer, par le biais de la commande de la source de courant de soudage, qu'un premier état non sûr de la source de courant de soudage existe lorsque le mode sélectionné est déterminé comme étant le mode soudage et quand l'au moins un courant électrique est déterminé comme circulant à travers l'au moins un câble connecté au connecteur de sortie de batterie ;
de fermer, par le biais de la commande de la source de courant de soudage, une électronique de courant de la source de courant de soudage en réponse à la détermination que le premier état non sûr de la source de courant de soudage existe, dans lequel l'électronique de courant est configurée pour fournir du courant de soudage au connecteur de sortie de soudage durant le mode soudage.

2. Procédé selon la revendication 1, comprenant en outre de communiquer la détection à la commande de la source de courant de soudage en tant qu'une tension.

3. Procédé selon la revendication 1 ou 2, dans lequel le mode batterie est l'un d'un mode de recharge ou de charge de batterie.

4. Procédé selon l'une quelconque des revendications 1 à 3, comprenant en outre :
de déterminer, par le biais de la commande de la source de courant de soudage, qu'un second état non sûr de la source de courant de soudage existe lorsque le mode sélectionné est déterminé comme étant le mode batterie et quand l'au moins un courant électrique est déterminé comme circulant à travers l'au moins un câble connecté au connecteur de sortie de soudage ; et
de fermer, par le biais de la commande de la source de courant de soudage, l'électronique de courant de la source de courant de soudage en réponse à la détermination que le second état non sûr de la source de courant de soudage existe, dans lequel l'électronique de courant est configurée pour fournir au moins un d'un mode de recharge ou de charge de batterie sur le connecteur de sortie de batterie pendant le mode batterie.

5. Procédé selon la revendication 4, comprenant en outre :
de générer un message, par le biais de la commande de la source de courant de soudage, indiquant le second état non sûr ; et
d'afficher le message, fourni par la commande de la source de courant de soudage, sur un écran d'affichage de la source de courant de soudage, et/ou
comprenant en outre d'indiquer à la commande de la source de courant de soudage, par le biais d'une saisie d'utilisateur, que l'utilisateur pense que l'état non sûr a été éliminé.

6. Source de courant de soudage (210, 310, 410, 810), comprenant :
un connecteur de sortie de soudage (250, 350, 450, 850) ;
un connecteur de sortie de batterie (260, 360, 460, 860) ;
une électronique de courant (220, 320, 420, 820) configurée pour fournir du courant de soudage sur le connecteur de sortie de soudage (250, 350, 450, 850) et du courant de recharge de batterie ou du courant de charge de batterie sur le connecteur de sortie de batterie (260, 360, 460, 860) ;
une commande (230, 330, 430, 830) incluant une logique de sécurité (235, 335, 435), dans lequel la logique de sécurité (235, 335, 435) inclut au moins un :
d'un matériel de circuit, ou
d'instructions exécutables sur ordinateur conservées dans une mémoire et un processeur pour exécuter les instructions exécutables sur ordinateur ; et
au moins un capteur de courant (290, 390, 490, 492), dans laquelle le capteur de courant est au moins l'un d'un shunt à résistance de précision, d'un capteur à effet hall ou d'un interrupteur à lames, configuré pour :
détecter quand au moins un courant électrique circule à travers au moins un câble connecté à au moins un du connecteur de sortie de soudage (250, 350, 450, 850) ou du connecteur de sortie de batterie (260, 360, 460, 860), et
de fournir au moins une tension, dérivée de l'au moins un courant électrique tel que détecté, à la commande (230, 330, 430, 830),
dans laquelle la logique de sécurité (235, 335, 435) de la commande est configurée pour déterminer quand un état non sûr de la source de courant de soudage (210, 310, 410, 810) existe en se basant sur au moins l'au moins une tension, de telle façon que la logique de sécurité de la commande soit adaptée pour exécuter un procédé selon l'une quelconque des revendications 1 à 5.

7. Source de courant de soudage (210, 310, 410, 810) selon la revendication 6, dans laquelle l'électronique de courant (220, 320, 420, 820) est configurée pour appliquer une tension test à l'au moins un du connecteur de sortie de soudage (250, 350, 450, 850) ou du connecteur de sortie de batterie (260, 360, 460, 860) avant que l'au moins un capteur de courant (290, 390, 490, 492) ne détecte quand l'au moins un courant électrique circule à travers l'au moins un câble connecté à au moins un du connecteur de sortie de soudage (250, 350, 450, 850) ou du connecteur de sortie de batterie (260, 360, 460, 860), et avant de fournir l'au moins une tension, dérivée de l'au moins un courant électrique tel que détecté, à la commande (230, 330, 430, 830).

8. Source de courant de soudage (210, 310, 410, 810) selon la revendication 7 ou 8, dans laquelle le matériel de circuit inclut un processeur de signal numérique, et/ou
dans laquelle le matériel de circuit inclut une combinaison de circuits logiques numériques, et/ou
dans laquelle le matériel de circuit inclut une circuiterie électronique analogique.

9. Source de courant de soudage (210, 310, 410, 810) selon l'une quelconque des revendications 7 à 8, comprenant en outre un écran d'affichage (240, 340, 440, 840) configuré pour afficher un message fourni par la commande (230, 330, 430, 830) indiquant l'état non sûr,
et/ou
comprenant en outre une saisie (395, 495) d'utilisateur configurée pour, lorsque activée par un utilisateur, indiquer à la commande (230, 330, 430, 830) que l'utilisateur pense que l'état non sûr a été éliminé.

10. Source de courant de soudage (210, 310, 410, 810) selon l'une quelconque des revendications-7 à 10, dans laquelle la source de courant de soudage (210, 310, 410, 810) fait partie d'un système de soudage (200, 300, 400, 800) entraîné par moteur.
